# EUROPEAN PATENT APPLICATION

(11) **EP 4 557 316 A1**
(43) Date of publication of application: **21.05.2025**
(21) Application number: 24214223.0
(22) Date of filing: 20.11.2024
(51) Int. Cl.: H01B 1/22, H01M 4/505, H01M 4/525, H01M 10/0525, C01G 53/50, C01G 53/56

(54) **ACTIVATION METHODS OF RECHARGEABLE LITHIUM BATTERIES AND RECHARGEABLE LITHIUM BATTERIES**

(30) Priority: 20.11.2023 KR 20230161472
(71) Applicant: SAMSUNG SDI CO., LTD., Yongin-si, Gyeonggi-do 17084 (KR)
(72) Inventor: LEE, Changjin, 17084 Yongin-si, Gyeonggi-do (KR); KWON, Seonyoung, 17084 Yongin-si, Gyeonggi-do (KR); SON, Jungwoo, 17084 Yongin-si, Gyeonggi-do (KR); YOO, Heewon, 17084 Yongin-si, Gyeonggi-do (KR)
(74) Representative: Bardehle Pagenberg Partnerschaft mbB Patentanwälte Rechtsanwälte

(57) **Abstract**

Disclosed are an activation method of a rechargeable lithium battery and a rechargeable lithium battery, the activation method including sequentially performing a first charging and discharging process and a second charging and discharging with respect to a rechargeable lithium battery including a positive electrode including a positive electrode active material including a layered lithium nickel-manganese-based composite oxide, a negative electrode, a separator between the positive electrode and the negative electrode, and an electrolyte solution, wherein an upper limit voltage of the second charging is higher than an upper limit voltage of the first charging.

## Description

### BACKGROUND OF THE INVENTION

### (a) Field of the Invention

Activation methods of rechargeable lithium batteries and rechargeable lithium batteries are disclosed.

### (b) Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminum composite oxide, and lithium cobalt oxide are mainly used as positive electrode active materials. However, while the demand for large-sized, high-capacity, or high-energy-density rechargeable lithium batteries has recently increased, the supply of a positive electrode active material containing cobalt, a rare metal, is expected to be severely short. In other words, because cobalt is expensive and there are not many remaining reserves, there are needs for developing positive electrode active materials that exclude cobalt or reduce its content.

### SUMMARY OF THE INVENTION

In a rechargeable lithium battery using a positive electrode active material including a lithium nickel-manganese-based composite oxide, high voltage activation is applied to increase capacity while simultaneously preventing lithium precipitation due to reversal of an N/P ratio and improving reversible capacity and cycle-life characteristics.

According to the present invention, an activation method of a rechargeable lithium battery as defined in claim 1 and a rechargeable lithium battery as defined in claim 11 are provided. Preferred embodiments of the invention are described in the dependent claims.

Some embodiments may provide a method of activating a rechargeable lithium battery by sequentially performing a first charging and discharging process and a second charging and discharging with respect to a rechargeable lithium battery that includes a positive electrode including a positive electrode active material including a layered lithium nickel-manganese-based composite oxide, a negative electrode, a separator between the positive electrode and the negative electrode, and an electrolyte solution, wherein an upper limit voltage of the second charging may be higher than an upper limit voltage of the first charging.

In some embodiments, a rechargeable lithium battery may include a positive electrode including a positive electrode active material including a layered lithium nickel-manganese-based composite oxide, a negative electrode, a separator between the positive electrode and the negative electrode, and an electrolyte solution, wherein a designed N/P ratio may be about 1.13 to about 1.15 and an N/P ratio when charged at about 4.6 V or more may be greater than or equal to about 1.

When applying the method of activating a rechargeable lithium battery according to some embodiments, lithium precipitation due to reversal of the N/P ratio is prevented while maximizing capacity, and reversible capacity and cycle-life characteristics can be improved at the same time.

### BRIEF DESCRIPTION OF THE DRAWINGS

FIGS. 1 to 4 are cross-sectional views schematically showing a rechargeable lithium battery according to some embodiments.
FIG. 5 is a graph evaluating high-temperature cycle-life characteristics for the rechargeable lithium battery cells of Comparative Examples 1 to 3 and Example 2.
FIG. 6 is a graph showing high-temperature cycle-life characteristics evaluation for the rechargeable lithium battery cells of Examples 1 to 4.
FIG. 7 is a graph showing high-temperature cycle-life characteristics evaluation for the rechargeable lithium battery cells of Comparative Examples 2 to 4 and Example 4.
FIG. 8 is a graph showing the peak of the portion corresponding to the (020) crystal plane in X-ray diffraction analysis (XRD) of the positive electrode plates of Comparative Example 1 and Example 2 after activation.
FIGS. 9 to 11 show dQ/dV profiles of the cells of Comparative Examples 1 and 3 and Example 2 at the third cycle after activation.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof' means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Method of Activating Rechargeable Lithium Battery

In some embodiments, a method of activating a rechargeable lithium battery may include sequentially performing a first charging and discharging process and a second charging and discharging with respect to a rechargeable lithium battery that includes a positive electrode including a positive electrode active material including a layered lithium nickel-manganese-based composite oxide, a negative electrode, a separator between the positive electrode and the negative electrode, and an electrolyte solution, wherein an upper limit voltage of the second charging is higher than an upper limit voltage of the first charging.

As the price of cobalt, a rare metal, has recently risen sharply, there is a demand for the development of positive electrode active materials that exclude cobalt or reduce its content. Among which a positive electrode active material having an olivine crystal structure such as lithium iron phosphate (LFP), lithium manganese phosphate (LMP), lithium manganese iron phosphate (LMFP), and the like or a spinel crystal structure such as lithium manganese oxide (LMO) and the like has a limitation in realizing high capacity due to a small available lithium amount within the structure. The layered lithium nickel-manganese positive electrode active material has excellent capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes difficult to secure long cycle-life characteristics. In particular, as cycles progress, because cation mixing of Ni²⁺ and Li⁺ becomes more severe, which causes a structural change of the positive electrode active material to increase resistance and also the generation of cracks due to the swelling, there are problems of significantly reducing reversible capacity, compared to a conventional layered nickel-cobalt-based composite oxide-based positive electrode active material, and deteriorating long-term cycle-life characteristics.

In batteries to which the layered lithium nickel-manganese-based composite oxide positive electrode active material is applied, it is possible to improve the capacity by activating it at a high voltage higher than a normal voltage, but there is a problem that an N/P ratio is reversed due to a rapid increase in first charge capacity, which may cause precipitation of a lithium metal at a negative electrode and drastically reduce a cycle-life of the batteries or cause a micro-short circuit and resultantly deteriorate safety. If the designed N/P ratio is increased, the capacity may be increased by an increase in a negative electrode potential, but there is another problem of accompanying deterioration of cycle-life characteristics and reducing energy density.

Accordingly, some embodiments propose a method of applying a step-type high-voltage activation to prevent the lithium precipitation of the negative electrode due to the N/P reversal and simultaneously, improve reversible capacity and cycle-life characteristics. In the activation process of a rechargeable lithium battery, first charging and discharging, that is, the first cycle, is performed within a normal voltage range, then, second charging and discharging, that is, the second cycle, is performed at a high voltage range higher than the normal voltage range to prevent the N/P reversal and improve capacity and cycle-life characteristics without increasing the designed N/P ratio.

In the activation method of a rechargeable lithium battery according to some embodiments, an upper limit voltage of the first charging may be designed to be less than or equal to about 4.5 V, and an upper limit voltage of the second charging may be designed to be greater than about 4.5 V. For example, the upper limit voltage of the first charging may be less than or equal to about 4.4 V, about 4.0 V to about 4.4 V, or about 4.2 V to about 4.4 V, and the upper limit voltage of the second charging may be greater than or equal to about 4.6 V, about 4.6 V to about 4.8 V, or about 4.6 V to about 4.7 V.

After activation, the third charging and discharging can proceed in the same voltage range as the first charging and discharging. That is, the upper limit voltage after the third charging and discharging may be the same or similar to the upper limit voltage of the first charging.

The first charging and discharging and the second charging and discharging may be performed at the same or different rates and respectively less or equal to about 0.2 C.

The designed N/P ratio of a rechargeable lithium battery according to some embodiments may be about 1.13 to about 1.15. If the N/P ratio is designed within the range, there may be neither the N/P ratio reversal nor the lithium metal precipitation at a negative electrode, but reversible capacity and cycle-life characteristics may be simultaneously improved. Herein, the designed N/P ratio refers to a ratio of negative electrode capacity to positive electrode capacity, and theoretical capacity of each electrode may be calculated according to {(specific capacity of active material) x (amount of active material) x (loading level)}. The specific capacity of an active material may refer to first discharge specific capacity, which is measured after manufacturing a half-cell by using a lithium metal as a counter electrode. The designed N/P ratio may also be referred to as initial N/P ratio.

A rechargeable lithium battery activated according to some embodiments may have a charging N/P ratio of about 1 or more in the second charging and discharging, for example, about 1 to about 1.1, about 1 to about 1.05, or about 1.01 to about 1.03. In other words, even though a high voltage formation method is applied, the N/P ratio reversal is prevented.

On the other hand, in an X-ray diffraction analysis of a positive electrode completed with the second charging and discharging, a ratio of peak intensity of a (003) plane to that of a (104) plane may be greater than or equal to about 3.5 and less than or equal to about 4.5, for example, greater than or equal to about 3.5 less than or equal to about 4.2, greater than or equal to about 3.7 and less than or equal to about 4.1, or greater than or equal to about 3.8 and less than or equal to about 4.0. In addition, a full width at half maximum (FWHM) of the (003) plane may be greater than or equal to about 0.090 and less than or equal to about 0.12, and a full width at half maximum (FWHM) of the (104) plane may be greater than or equal to about 0.175 and less than or equal to about 0.190. After applying the activation method, the positive electrode active material may be said to well maintain the layered structure.

Hereinafter, each component of the battery will be described in detail.

### Rechargeable Lithium Battery

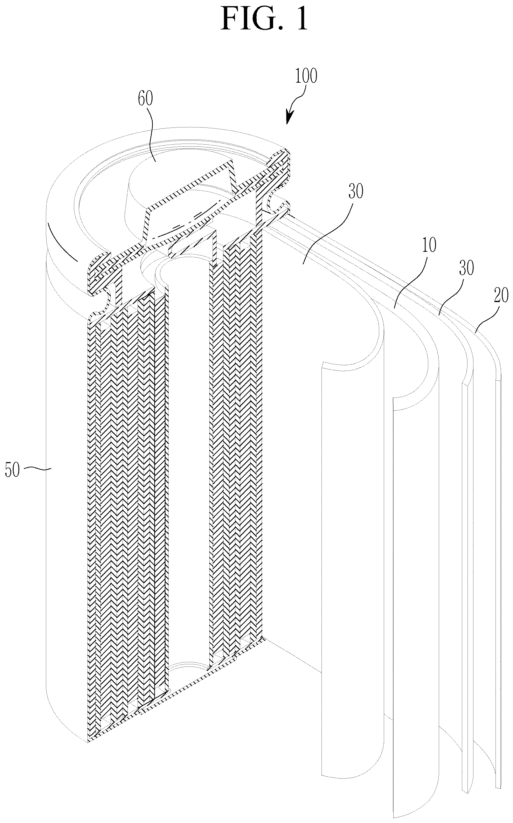

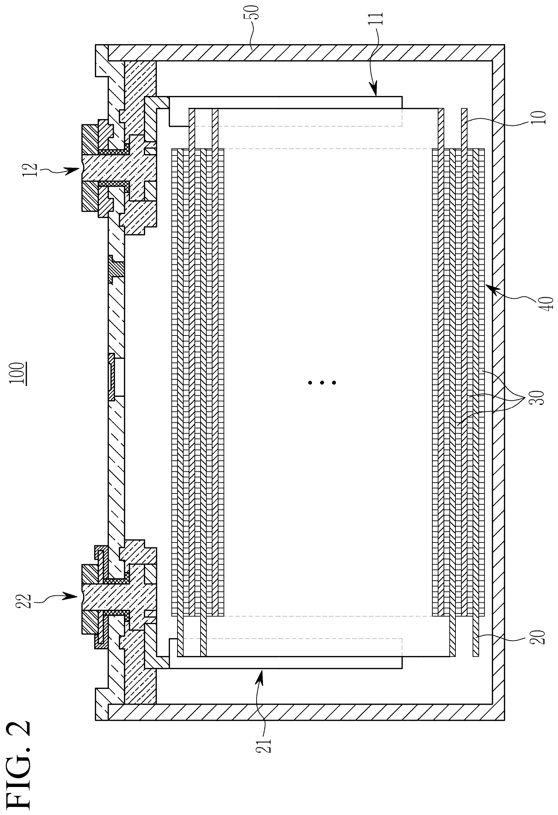

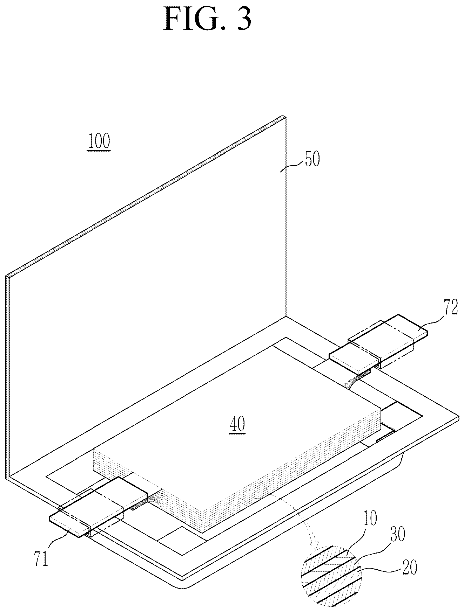

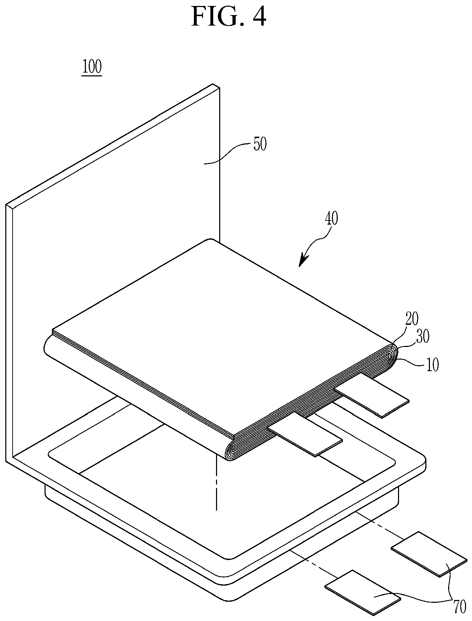

The rechargeable lithium battery may be classified into cylindrical, prismatic, pouch, coin, etc. depending on the shape. FIGS. 1 to 4 are schematic diagrams showing the rechargeable lithium battery according to some embodiments, where FIG. 1 shows a cylindrical battery, FIG. 2 shows a prismatic battery, and FIGS. 3 and 4 show a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

### Positive Electrode

The positive electrode includes a positive electrode current collector and a positive electrode active material layer on the positive electrode current collector, and the positive electrode active material layer includes a positive electrode active material, and may optionally further include a binder, a conductive material, or a combination thereof. In some embodiments, the positive electrode active material layer includes a positive electrode active material including a layered lithium nickel-manganese-based composite oxide.

### Positive Electrode Active Material

In the layered lithium nickel-manganese-based composite oxide, a nickel content may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal excluding lithium in the lithium nickel-manganese-based composite oxide. If the nickel content satisfies the above range, high capacity may be achieved and structural stability may be increased even if the cobalt content is reduced.

A manganese content may be, for example, greater than or equal to about 10 mol%, for example about 15 mol% to about 40 mol%, about 15 mol% to about 35 mol%, about 15 mol% to about 30 mol%, or about 20 mol% to about 30% based on 100 mol% of a total metal excluding lithium in the lithium nickel-manganese-based composite oxide. If the manganese content satisfies the above range, the positive electrode active material may improve structural stability while realizing high capacity.

The layered lithium nickel-manganese-based composite oxide may be a lithium nickel-manganese-aluminum-based composite oxide that further includes aluminum in addition to nickel and manganese. If the composite oxide contains aluminum, it is advantageous to maintain a stable layered structure even if the cobalt element is excluded from the structure. An aluminum content based on 100 mol% of the layered lithium nickel-manganese-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. If the aluminum content satisfies the above range, a stable layered structure may be maintained even if cobalt is excluded, the problem of structure collapse due to charging and discharging may be suppressed, and long cycle-life characteristics of the positive electrode active material may be realized.

According to some embodiments, a concentration of aluminum in the layered lithium nickel-manganese-based composite oxide may be uniform. In other words, it means that there is a concentration gradient of aluminum from the center to the surface within the layered lithium nickel-manganese-based composite oxide, or that the aluminum concentration in the inner portion of the particle is neither higher nor lower than in the inner portion, and that the aluminum within the particle is evenly distributed. This may be a structure obtained by using an aluminum raw material during precursor production without additional doping of aluminum during the synthesis of the particles and thereby synthesizing a composite oxide using nickel-manganese-aluminum-based hydroxide as a precursor. In this structure, a stable layered structure can be maintained even if cobalt is absent or is present in a very small amount, and aluminum by-products or aluminum aggregates are not generated, so that the capacity, efficiency, and cycle-life characteristics of the positive electrode active material can be improved at the same time.

The layered lithium nickel-manganese-based composite oxide may be specifically represented by Chemical Formula 1.

[Chemical Formula 1] Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more element selected from B, Ba, Ca, Ce, Cr, Fe, Mg, Mo, Nb, Si, Sn, Sr, Ti, V, W, and Zr, and X is one or more element selected from F, P, and S.

In Chemical Formula 1, 0.9≤a1≤1.5, or 0.9≤a1≤1.2. Additionally, Chemical Formula 1 may contain aluminum, in which case 0.6≤x1≤0.8, 0.1≤y1≤0.39, 0.01≤z1≤0.03, and 0≤w1≤ 0.29 may be satisfied, or for example, 0.6≤x1≤0.8, 0.1≤y1≤0.39, 0.01<z1≤0.03, and 0≤w1≤0.29.

In Chemical Formula 1, for example, 0.6≤x1≤0.79, 0.6≤x1≤0.78, 0.6≤x1≤ 0.75, 0.65≤x1≤ 0.8, or 0.7≤x1≤0.79, 0.1≤ y1≤0.35, 0.1≤y1≤0.30, 0.1≤y1≤0.29, 0.15≤y1≤ 0.39, or 0.2≤y1≤0.3, 0.01≤z1 ≤0.025, 0.01<z1≤0.02, or 0.01<z1≤0.019, and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

For example, the layered lithium nickel-manganese-based composite oxide may not contain cobalt or may contain a small amount of cobalt and the cobalt content may be about 0 mol% to about 0.01 mol% based on 100 mol% of a total metal excluding lithium.

For example, the positive electrode active material may include large particles having an average particle diameter (D₅₀) of about 10 µm to about 25 µm and small particles having an average particle diameter (D₅₀) of about 0.5 µm to about 8 µm. By appropriately mixing large particles and small particles, the capacity and energy density of the lithium nickel-manganese-based positive electrode can be maximized and its cycle-life characteristics and durability can be improved.

The large particles may be in the form of a secondary particle made by agglomerating a plurality of primary particles, and the small particles may be in the form of a secondary particle, a single particle, or a combination thereof. In one example, the positive electrode active material may include large particles in the form of secondary particles and small particles in the form of single particles. By properly mixing large particles in the form of secondary particles and single particles, the capacity and energy density of the nickel-manganese-based positive electrode can be maximized and cycle-life characteristics and durability can be improved.

The average particle diameter (D₅₀) of the large particles may be about 10 µm to about 25 µm, for example, about 10 µm to about 20 µm, about 10 µm to about 18 µm, or about 12 µm to about 16 µm. The average particle diameter (D₅₀) of the second positive electrode active material and/or the small particles may be, for example, about 0.5 µm to about 8 µm, about 1 µm to about 7 µm, about 1.5 µm to about 6 µm, or about 2 µm to about 5 µm. If the average particle diameter of each positive electrode active material satisfies the above ranges, high capacity and high energy density can be achieved. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image for positive electrode active materials.

The large particles may be included in an amount of about 60 wt% to about 95 wt%, for example about 70 wt% to about 90 wt%, based on 100 wt% of the total of the large particles and small particles. The small particles may be included in an amount of about 5 wt% to about 40 wt%, for example about 10 wt% to about 30 wt%, based on 100 wt% of the total of the large particles and small particles. If the mixing ratio satisfies the above range, energy density can be increased while maximizing capacity.

The positive electrode active material includes core particles including the layered lithium nickel-manganese-based composite oxide and a coating layer located on the surface of the core particles and including at least one element selected from Al, B, Co, Mg, Y, and Zr.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Each content of the binder and the conductive material may be about 0.5 wt% to about 5 wt% based on 100 wt% of the positive electrode active material layer.

The positive electrode current collector may include Al, but is not limited thereto.

According to some embodiments, a loading level of the positive electrode active material layer may be about 10 mg/cm² to about 40 mg/cm², for example about 10 mg/cm² to about 30 mg/cm², or about 10 mg/cm² to about 20 mg/cm². Additionally, a density of the positive electrode active material layer in the final compressed positive electrode may be about 3.3 g/cc to about 3.7 g/cc, for example about 3.3 g/cc to about 3.6 g/cc or about 3.4 g/cc to about 3.58 g/cc.

### Negative Electrode

The negative electrode may include a current collector and a negative electrode active material layer on the current collector, and may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content ratio of Si:O, which indicates a degree of oxidation, may be about 99:1 to about 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

### Design of Rechargeable Lithium Battery

In some embodiments, a rechargeable lithium battery includes a positive electrode including a positive electrode active material including a layered lithium nickel-manganese-based composite oxide, a negative electrode, a separator between the positive electrode and the negative electrode, and electrolyte solution, wherein a designed N/P ratio is about 1.13 to about 1.15 and an N/P ratio when charged at about 4.6 V or more is greater than or equal to about 1.

If the designed N/P ratio is set within a range of about 1.13 to about 1.15 and the above activation method is applied, when charging at about 4.6 V or more (e.g., charging of the second charging and discharging in above activation method), the N/P ratio may satisfy about 1 or more. In other words, the high voltage formation method may be applied to improve capacity and simultaneously, prevent the N/P ratio reversal, thereby, preventing lithium precipitation of a negative electrode and resultantly improving cycle-life characteristics.

If charged at about 4.6 V or more, the N/P ratio may be, for example, about 1 to about 1.1, about 1 to about 1.05, or about 1.01 to about 1.03.

The rechargeable lithium battery may have a driving range of less than about 4.6 V, less than about 4.5 V, less than or equal to about 4.4 V, or about 4.0 V to about 4.4 V. During the activation process, the first cycle charging and discharging may be performed within the driving voltage range, and the second cycle charging and discharging may be performed to an upper limit voltage of greater than or equal to about 4.6 V to significantly improve reversible capacity, and in addition, if the charging and discharging is performed to greater than or equal to about 4.5 V, the N/P ratio may not be reversed but exhibit about 1 or more.

A positive electrode, a negative electrode, a separator, and an electrolyte are the same as described above and will not be repeatedly described in detail.

Examples and comparative examples of the present disclosure are described below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a molar ratio of 1:1.05 and then, heat-treated at 855 °C under an oxygen atmosphere for 15 hours to prepare a lithium nickel-manganese-based active material.

The preliminary positive electrode active material was secondarily heat-treated at 825 °C for 20 hours to prepare large particles having a composition of Li_{1.05}Ni_{0.75}Mn_{0.23}Al_{0.02}O₂ in the form of secondary particles with an average particle diameter (D₅₀) of about 14 µm.

On the other hand, Ni_{0.75}Mn_{0.25}(OH)₂ and LiOH were mixed in a molar ratio of 1:1.05 and then, twice heat-treated at 850 °C under an oxygen atmosphere to prepare small particles having a composition of LiNi_{0.75}Mn_{0.25}O₂ in the form of single particles with an average particle diameter (D₅₀) of about 4 µm. In the secondary firing, the single small particles were surface-coated.

The large particles and the small particles were mixed in a weight ratio of 7:3 to prepare a final positive electrode active material.

### 2. Manufacturing of Rechargeable Lithium Battery Cell

97.7 wt% of the prepared positive electrode active material, 1.3 wt% of a polyvinylidene fluoride binder, and 1.0 wt% of a carbon-based conductive material were mixed to prepare positive electrode active material layer slurry, and the positive electrode active material layer slurry was coated to be about 30 mg/cm² on a 13.5 µm-thick aluminum foil current collector and then, dried and compressed at 110 °C for 1 hour, manufacturing a positive electrode with mixture density of about 3.5 g/cm³.

Negative electrode active material slurry was prepared by mixing SBR (styrene butadiene rubber) and CMC (carboxymethyl cellulose) in a weight ratio of 1:1 and then, mixing graphite powder as a negative electrode active material with the mixture in a weight ratio of 97:3.

The prepared negative electrode active material slurry was coated to be 17 mg/cm² on a 8 µm-thick copper foil current collector. The coated electrode plate was dried at 100 °C for 1 hour or more and then, compressed to manufacture a negative electrode with mixture density of 1.5 g/cm³.

The positive and negative electrodes were used with a polyethylene separator (STAR 20, Asahi) and an electrolyte prepared by dissolving 1.15 M LiPF₆ in a mixed solvent of EC (ethylenecarbonate): EMC (ethylmethylcarbonate):DMC (dimethylcarbonate) (a volume ratio of 2:4:4) to manufacture a rechargeable lithium battery cell with capacity of 30 mAh.

Example 1 was designed to have an N/P ratio of 1.12.

### 3. Activation of Rechargeable Lithium Battery Cell

The rechargeable lithium battery cell was charged to an upper limit voltage of 4.4 V at a constant current of 0.2 C and discharged to a cut-off voltage of 2.8 V at 0.2 C at 25 °C for first charging and discharging. Subsequently, the cell was charged to an upper limit voltage of 4.6 V at the constant current of 0.2 C and discharged to a cut-off voltage of 2.8 V at 0.2 C for second charging and discharging.

### Examples 2 to 4 and Comparative Examples 1 to 4

The rechargeable lithium battery cells were manufactured substantially in the same manner as in Example 1 except that the upper limit voltage of the first charging, the upper limit voltage of the second charging, and the designed N/P ratio were changed as shown in Table 1.

**(Table 1)**

| | First charging and discharging | Second charging and discharging | Designed N/P ratio |
|---|---|---|---|
| Comparative Example 1 | 4.4 V | 4.4 V | 1.12 |
| Comparative Example 2 | **4.6 V** | 4.4 V | 1.12 |
| Comparative Example 3 | **4.6 V** | 4.4 V | 1.13 |
| Example 1 | 4.4 V | **4.6 V** | 1.12 |
| Example 2 | 4.4 V | **4.6 V** | 1.13 |
| Example 3 | 4.4 V | **4.6 V** | 1.14 |
| Example 4 | 4.4 V | **4.6 V** | 1.15 |
| Comparative Example 4 | **4.6 V** | 4.4 V | 1.15 |

### Evaluation Example 1: Evaluation of 4.6V charging N/P ratio, lithium precipitation, BOL capacity, and high-temperature cycle-life characteristics

The rechargeable lithium battery cells of Examples 1 to 4 and Comparative Examples 1 to 4 were charged and discharged at 4.6 V and then, calculated with respect to an N/P ratio at each cycle, which are shown in Table 2, wherein because Comparative Example 1 had no charging and discharging cycle at 4.6 V, an N/P ratio at the first charging is shown in Table 2 instead. In addition, after the 4.6 V full-charging, the battery cells were disassembled to examine whether or not lithium was precipitated at each of the negative electrodes with naked eye, and the results are shown in Table 2.

In addition, the rechargeable lithium battery cells of Examples 1 to 4 and Comparative Examples 1 to 4 were charged and discharged within a range of 2.8 V to 4.4 V at 0.33 C as the third cycle after the second charging and discharging to measure discharge capacity, that is, specific capacity (mAh/g) during BOL (Beginning of Life), which is shown in Table 2.

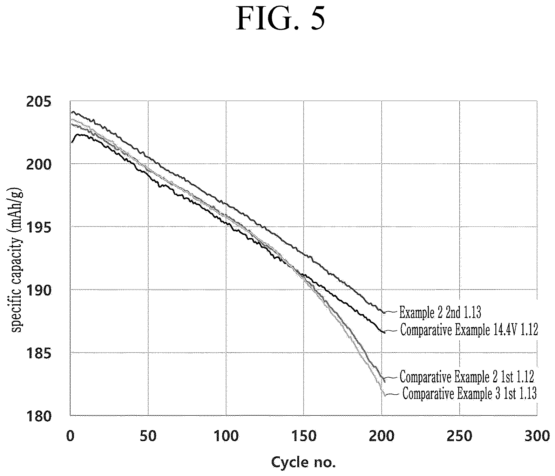

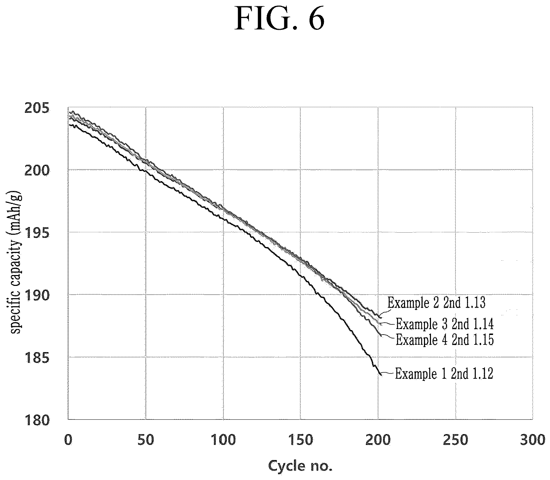

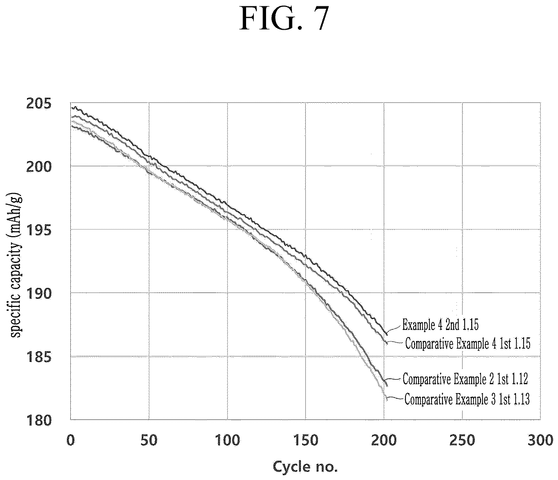

After the third cycle, the battery cells were 200 cycles or more repeatedly charged and discharged at 0.5 C within a range of 2.8 V to 4.4 V at 45 °C, and then, discharge specific capacity according to the number of cycles is shown in FIGS. 5 to 7, and discharge specific capacity at the 200^{th} cycle is shown in Table 2.

**(Table 2)**

| | Activation voltage | Design ed N/P ratio | 4.6V chargi ng N/P ratio | Li is precipit ated or not | BOL capacity (mAh/g) | 200th specific capacity (mAh/g) |
|---|---|---|---|---|---|---|
| Comparative Example 1 | 4.4 V → 4.4 V | 1.12 | 1.018 | X | 185.4 | 186.6 |
| Comparative Example 2 | 4.6 V → 4.4 V | 1.12 | 0.979 | O | 187.2 | 182.8 |
| Comparative Example 3 | 4.6 V → 4.4 V | 1.13 | 0.985 | O | 187.6 | 181.8 |
| Example 1 | 4.4 V → 4.6 V | 1.12 | 0.996 | O | 187.8 | 184.2 |
| Example 2 | 4.4 V → 4.6 V | 1.13 | 1.003 | X | 188.3 | 188.5 |
| Example 3 | 4.4 V → 4.6 V | 1.14 | 1.008 | X | 188.5 | 188.1 |
| Example 4 | 4.4 V → 4.6 V | 1.15 | 1.015 | X | 188.6 | 187.5 |
| Comparative Example 4 | 4.6 V → 4.4 V | 1.15 | 1.001 | X | 188.4 | 186.2 |

Referring to Table 2, the examples, which were primarily charged and discharged at 4.4 V and secondarily charged and discharged at 4.6 V by increasing the voltage of 4.4 V, compared to the comparative examples, exhibited an increase in BOL capacity and capacity at the 200^{th} cycle.

Comparative Examples 2 and 3, which were first charged and discharged at 4.6 V, even if the designed N/P ratio was increased to 1.13, exhibited a sharply dropped cycle-life due to lithium precipitation. Example 2, in which the secondary charging and discharging was performed at 4.6 V and the N/P ratio was designed to 1.13, exhibited improved capacity and cycle-life characteristics without a sharp decrease in a cycle-life.

Examples 1 to 4, in which the N/P ratio was designed within a range of 1.13 to 1.15, exhibited much more excellent cycle-life characteristics without lithium precipitation. In addition, when the N/P ratio was designed to be 1.13 or higher, as the N/P ratio was higher, there was a tendency that capacity increased and then, was converged, resulting in a phenomenon that cycle-life characteristics were slightly deteriorated. Accordingly, Example 2, in which the N/P ratio was designed to be 1.13, exhibited the most excellent capacity and high temperature cycle-life characteristics.

Comparative Example 4, which proceeded with the first charging and discharging at 4.6 V, and in which the designed N/P ratio was increased to 1.15, exhibited no lithium precipitation but exhibited deteriorated BOL capacity and cycle-life characteristics, compared to Example 4, which proceeded with the second charging and discharging at 4.6 V.

### Evaluation Example 2: XRD Analysis of Positive Electrode Plate after Activation

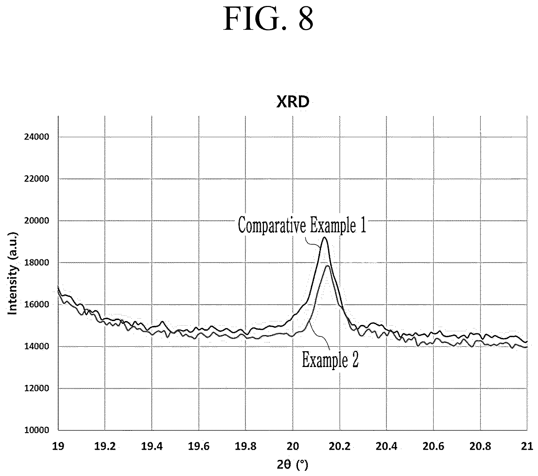

After activating the cells of Comparative Example 1 and Example 2, each positive electrode plate was subjected to an XRD analysis, and Table 3 shows an a axis lattice constant, a c axis lattice constant, a ratio of peak intensity of a (003) crystal plane to that of a (104) crystal plane, a full width at half maximum (FWHM) of the (003) crystal plane, and a full width at half maximum (FWHM) of the (104) crystal plane. In addition, a peak corresponding to a (020) crystal plane was enlarged and is shown in FIG. 8.

**(Table 3)**

| | Comparative Example 1 | Example 2 |
|---|---|---|
| Lₐ | 2.871 | 2.876 |
| L_{c} | 14.260 | 14.249 |
| I₍₀₀₃₎/I₍₁₀₄₎ | 4.220 | 3.972 |
| FWHM₍₀₀₃₎ | 0.088 | 0.095 |
| FWHM₍₁₀₄₎ | 0.173 | 0.184 |

Referring to Table 3, when the activation method according to some embodiments was applied, the positive electrode active material maintained a layered structure. In addition, referring to FIG. 8, Example 2, compared to Comparative Example 1, exhibited much lowered (020) peak intensity after the activation, and accordingly, a portion of Li₂MnO₃ was understood to be activated at a high voltage and contribute to increasing capacity.

### Evaluation Example 3: dQ/dV Analysis

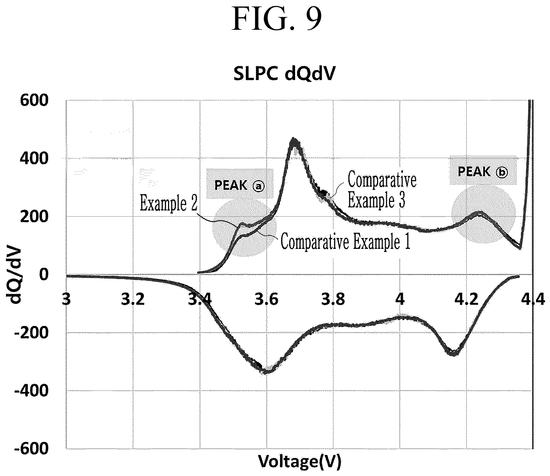

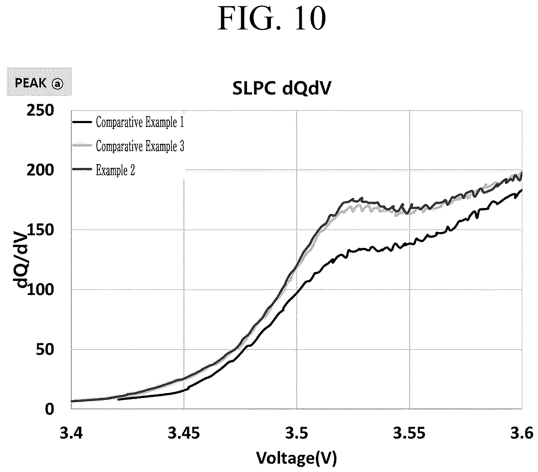

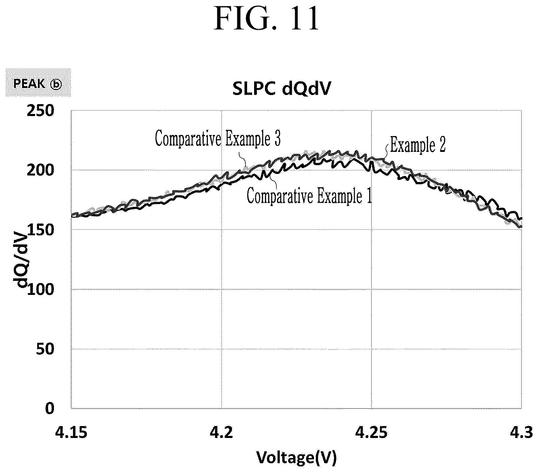

The cells of Comparative Examples 1 and 3 and Example 1 were charged and discharged as a third cycle at a rate of 0.33 C within a voltage range of 2.8 V to 4.4 V after the activation as in Evaluation Example 1, at which dQ/dV profiles of the cells were analyzed and then, shown in FIG. 9. In a graph of FIG. 9, a region of 3.4 V to 3.6 V was enlarged and is shown in FIG. 10, and a region 4.15 V to 4.3 V was also enlarged and is shown in FIG. 11. In addition, in FIG. 9, peak intensity in a region marked as a peak ⓐ, peak intensity in a region marked as a peak ⓑ, and a ratio of the former to the latter as an electron ratio are shown in Table 4.

**(Table 4)**

| | Comparative Example 1 | Comparative Example 3 | Example 2 |
|---|---|---|---|
| | 4.4 V → 4.4 V | **4.6 V** → 4.4 V | 4.4 V → **4.6 V** |
| I_ⓐ | 134.2 | 170.1 | 176.7 |
| I_ⓑ | 209.8 | 216.0 | 216.0 |
| I_ⓐ/I_ⓑ | 0.639 | 0.788 | 0.818 |

Referring to FIGS. 9 to 11 and Table 4, Example 2 exhibited much increased peak intensity of the peak ⓐ corresponding to 3.5 V, and accordingly, the activation method according to some embodiments turned out to be applied to increase capacity.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An activation method of a rechargeable lithium battery (100), comprising
sequentially performing a first charging and discharging process and a second charging and discharging
with respect to a rechargeable lithium battery (100) that includes
a positive electrode (10) including a positive electrode active material including a layered lithium nickel-manganese-based composite oxide,
a negative electrode (20),
a separator (30) between the positive electrode (10) and the negative electrode (20), and
an electrolyte solution,
wherein an upper limit voltage of the second charging is higher than an upper limit voltage of the first charging.

2. The activation method as claimed in claim 1, wherein
an upper limit voltage of charging and discharging from the third charging and discharging thereafter is the same as an upper limit voltage of the first charging.

3. The activation method as claimed in claim 1 or 2, wherein
the upper limit voltage of the first charging is less than or equal to 4.5 V,
and
the upper limit voltage of the second charging is greater than 4.5 V, in particular wherein
the upper limit voltage of the first charging is less than or equal to 4.4 V, and
the upper limit voltage of the second charging is greater than or equal to 4.6 V, preferably wherein
the upper limit voltage of the first charging is 4.0 V to 4.4 V, and
the upper limit voltage of the second charging is 4.6 V to 4.8 V.

4. The activation method as claimed in any one of claims 1 to 3, wherein
rates of the first charging and discharging and second charging and discharging are the same or different from each other and are each 0.2 C or less.

5. The activation method as claimed in any one of claims 1 to 4, wherein
an initial N/P ratio is 1.13 to 1.15; and/or wherein
a charging N/P ratio in the second charging and discharging is greater than or equal to 1.

6. The activation method as claimed in any one of claims 1 to 5, wherein
the layered lithium nickel-manganese-based composite oxide has a nickel content of greater than or equal to 60 mol% based on 100 mol% of a total metal excluding lithium; and/or wherein
the layered lithium nickel-manganese-based composite oxide has a nickel content of 60 mol% to 80 mol% and a manganese content of greater than or equal to 10 mol% based on 100 mol% of a total metal excluding lithium.

7. The activation method as claimed in any one of claims 1 to 6, wherein
the layered lithium nickel-manganese-based composite oxide further includes aluminum and an aluminum content is 1 mol% to 3 mol% based on 100 mol% of a total metal excluding lithium, preferably wherein
a concentration of aluminum in the layered lithium nickel-manganese-based composite oxide is uniform.

8. The activation method as claimed in any one of claims 1 to 7, wherein
in the layered lithium nickel-manganese-based composite oxide, a cobalt content is 0 mol% to 0.01 mol% based on 100 mol% of a total metal excluding lithium.

9. The activation method as claimed in any one of claims 1 to 8, wherein
the layered lithium nickel-manganese-based composite oxide is represented by Chemical Formula 1:
[Chemical Formula 1] Liₐ₁Niₓ₁Mn_{y1}Al_{z1}M¹_{w1}O_{2-b1}X_{b1}
wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more element selected from B, Ba, Ca, Ce, Cr, Fe, Mg, Mo, Nb, Si, Sn, Sr, Ti, V, W, Y, and Zr, and X is one or more element selected from F, P, and S.

10. The activation method as claimed in any one of claims 1 to 9, wherein
the positive electrode active material includes
large particles having an average particle diameter (D₅₀) of 10 µm to 25 µm, and
small particles having an average particle diameter (D₅₀) of 0.5 µm to 8 µm; preferably:
wherein the large particles are in a form of a secondary particle made by agglomerating a plurality of primary particles, and the small particles are in a form of a secondary particle, a single particle, or a combination thereof; and/or
wherein the large particles are included in an amount of 60 wt% to 95 wt% and the small particles are included in an amount of 5 wt% to 40 wt%, based on a total of 100 wt% of the large particles and the small particles.

11. A rechargeable lithium battery (100), comprising
a positive electrode (10) including a positive electrode active material including a layered lithium nickel-manganese-based composite oxide,
a negative electrode (20),
a separator (30) between the positive electrode (10) and the negative electrode (20), and
an electrolyte solution,
wherein an initial N/P ratio of 1.13 to 1.15, and
an N/P ratio when charged at 4.6 V or more is greater than or equal to 1.

12. The rechargeable lithium battery (100) as claimed in claim 11, wherein
in the layered lithium nickel-manganese-based composite oxide, a nickel content is 60 mol% to 80 mol% and a manganese content is greater than or equal to 10 mol% based on 100 mol% of a total metal excluding lithium; and/or wherein
the layered lithium nickel-manganese-based composite oxide further includes aluminum and an aluminum content is 1 mol% to 3 mol% based on 100 mol% of a total metal excluding lithium.

13. The rechargeable lithium battery as claimed in claim 11 or 12, wherein
the layered lithium nickel-manganese-based composite oxide is represented by Chemical Formula 1:
[Chemical Formula 1] Liₐ₁Niₓ₁Mn_{y1}Al_{z1}M¹_{w1}O_{2-b1}X_{b1}
wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more element selected from B, Ba, Ca, Ce, Cr, Fe, Mg, Mo, Nb, Si, Sn, Sr, Ti, V, W, Y, and Zr, and X is one or more element selected from F, P, and S.

14. The rechargeable lithium battery (100) as claimed in any one of claims 11 to 13, wherein
the positive electrode active material includes
large particles having an average particle diameter (D₅₀) of 10 µm to 25 µm, and
small particles having an average particle diameter (D₅₀) of 0.5 µm to 8 µm; preferably:
wherein the large particles are in a form of a secondary particle made by agglomerating a plurality of primary particles, and the small particles are in a form of a secondary particle, a single particle, or a combination thereof; and/or
wherein the large particles are included in an amount of 60 wt% to 95 wt% and the small particles are included in an amount of 5 wt% to 40 wt%, based on a total of 100 wt% of the large particles and the small particles.

15. The rechargeable lithium battery (100) as claimed in any one of claims 11 to 14, wherein
the negative electrode (20) includes a lithium metal, a carbon-based negative electrode active material, a silicon-based negative electrode active material, or a combination thereof.
